# EUROPEAN PATENT SPECIFICATION

(11) **EP 2 407 681 B1**
(45) Date of publication and mention of the grant of the patent: **30.08.2017**
(21) Application number: 10169515.3
(22) Date of filing: 14.07.2010
(51) Int. Cl.: F16D 65/00, F16D 65/097

(54) **ANTINOISE SHIM AND BRAKE SHOE FOR A DISC BRAKE**
GERÄUSCHDÄMPFENDE UNTERLAGSSCHEIBE UND BREMSSCHUH FÜR EINE SCHEIBENBREMSE
SEGMENT DE FREIN ET DE CALE ANTIBRUIT POUR FREIN À DISQUE

(43) Date of publication of application: 18.01.2012
(73) Proprietor: Friction Materials, 21509 Glinde (DE)
(72) Inventor: Karatas, Ilhami, 21509 Glinde (DE); Yildiz, Mustafa, 21509 Glinde (DE)
(74) Representative: RGTH

(56) References cited:
- EP-A1- 1 519 071
- DE-C1- 4 104 812
- DE-U1- 8 426 713

## Description

The present invention relates to an antinoise shim and a brake shoe for a disc brake.

In general, antinoise shims for disc brakes are widely known. The known antinoise shims are generally mounted on a back side of a pad supporting plate for a brake lining by means of riveting and/or gluing. Usually, antinoise shims comprise one or multiple mounting holes through which the rivets are inserted and riveted in order to attach the antinoise shim on the pad supporting plate. Here, the mounting holes and the rivets need to be particularly aligned by an assembler during riveting in order to achieve an adequate connection between the pad supporting plate and the antinoise shim.

EP 1 519 071 A1 discloses a friction assembly which has a brake pad and a noise damping shim. The noise damping shim is engaged with a backing plate of the brake pad using a coupler. The coupler has a first coupler member formed on the backing plate and a second coupler member formed on the shim. In certain embodiments, the coupler may be a rivet coupler or a snap-in coupler.

DE 41 04 812 C1 discloses an antinoise shim according to the preamble of claim 1, wherein it discloses a brake pad comprising a lining support plate and a frictional lining, as well as a damper shim arranged on the side of said lining support plate averted from said frictional lining and being secured against slipping onto said lining support plate and against twisting, said lining support plate and said damper shim each having throughgoing recesses aligned with and adapted to each other and said recesses of the damper shim having projections protruding towards that lining support plate.

Therefore, it is the object of the invention to provide an antinoise shim and a brake shoe for a disc brake which can be manufactured easily at low costs and which comprises a low weight as well as enhanced damping properties.

This object is achieved by the antinoise shim having the features of claim 1. Advantageous further formations are subject of the dependent claims.

According to the invention, the antinoise shim for a disc brake comprises at least two mounting holes for mounting the antinoise shim on a pad supporting plate. In each of the mounting holes, multiple protrusions are provided, which protrude radially inwardly into the mounting hole. The radial protrusions have a contact portion at its radially inner end, which is contactable with a rivet used to mount the antinoise shim on the pad supporting plate.

By using protrusions in the mounting holes for fixing the antinoise shim to the pad supporting plate, it becomes easy to align the antinoise shim and the pad supporting plate, for example for a following riveting process, in that the protrusions secure the antinoise shim to the pad supporting plate.

One of the mounting holes comprises a number of radial protrusions that is different to the number of the other of the mounting holes. Thereby, alignment properties of the antinoise shim relative to the pad supporting plate can be enhanced. Alternatively or additionally the number of radial protrusions of at least one of the at least two mounting holes is uneven.

Furthermore, it is preferable to provide the protrusions in such a manner that they protrude in an axial direction of the mounting hole. Thereby, a specific displacement of the antinoise shim with respect to the rivet is possible. With such a construction, damping properties between the antinoise shim and the pad supporting plate can be provided.

Also, by using protrusions in each mounting hole, i.e. by forming recesses in the mounting holes, it becomes possible to save material because the mounting holes can be formed with bigger dimensions.

Preferably, the contact portion of the protrusions of each mounting hole is formed to be conform with the outer peripheral surface of the rivet. Thereby, an alignment of the rivet in the mounting hole can be easily secured and becomes easy to reliably and securely mount the antinoise shim on the pad supporting plate.

Such a construction makes it particularly possible to enlarge the size of each of the mounting holes in order to save material.

Further preferably, each radial protrusion in the respective mounting hole is inclined in an axial direction of the respective mounting hole. Thereby, when mounting the antinoise shim on the pad supporting plate, it becomes possible to use the damping force of the inclined protrusions in order to wedge the rivet against the protrusions of the respective mounting hole. Thus, an even more reliably fixation of the antinoise shim on the pad supporting plate can be realized.

In order to further enhance the alignment properties of the antinoise shim, it can be further preferable that a distance between adjacent radial protrusions is constant and that the radial protrusions in one mounting hole have the same lengths. Further preferably, the length of at least one contact portion of the radial protrusions of one mounting hole is different from the length of another contact portion.

Moreover, the antinoise shim can be used in a brake shoe of a disc brake comprising a pad supporting plate, a brake pad mounted on one side of the pad supporting plate and an antinoise shim as described above, wherein the antinoise shim is mounted on the pad supporting plate on the opposite side of the brake pad and wherein the antinoise shim is mounted on the pad supporting plate by means of rivets which are inserted through the mounting holes of the antinoise shim.

In a further preferential arrangement, the antinoise shim is additionally glued onto the pad supporting plate. Preferably, the radial protrusions may protrude from the antinoise shim in direction opposite to the pad supporting plate. Also, in a further preferable structure, the rivets can be integrally formed with the pad supporting plate.

In the following, an embodiment of this invention will be described with reference to the drawings, in which:
Fig. 1 is a top view of an antinoise shim for a disc brake according to an embodiment of the invention;
Fig. 2 is a sectional view of the antinoise shim along a line A-A of Fig. 1, including an enlarged view of a mounting hole of the antinoise shim;
Fig. 3 is a top view of the antinoise shim of Fig. 1, which is mounted on a pad supporting plate;
Fig. 4 is a sectional view of a brake pad assembly along a line B-B of Fig. 3, including an enlarged view of a rivet-mounting hole-fitting of the brake pad assembly; and
Fig. 5 is a sectional view of an alternative rivet-mounting-hole-fitting of the brake pad assembly along the line B-B of Fig. 3, including an enlarged view of a rivet-mounting hole-fitting of the brake pad assembly.

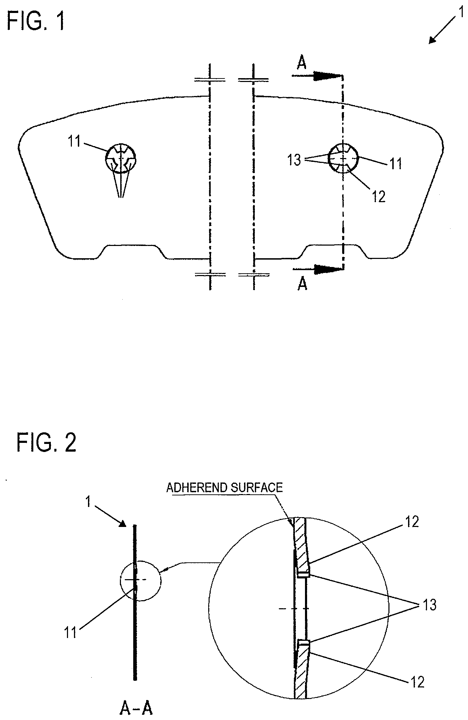

In Fig. 1, an embodiment of an antinoise shim 1 in accordance with the invention is shown in a front view. Here, for reasons of comprehensibility, the antinoise shim 1 is shown in a shortened way by means of breaklines.

In this embodiment of an antinoise shim 1 for a disc brake in accordance with the invention, the antinoise shim 1 has a plate shape wherein its upper edge is bent downwards in a circular manner and is connected to its narrower lower edge by side edges inclined towards the inside. The lower edge is oriented in a straight manner.

In the lower edge, recesses can be provided, as can be seen in Fig. 1, which serve as weight saving recesses of the antinoise shim 1. Furthermore, two circular mounting holes 11 are provided in an upper part of the antinoise shim 1, wherein each mounting hole 11 is provided in the vicinity of a respective side edge of the antinoise shim 1.

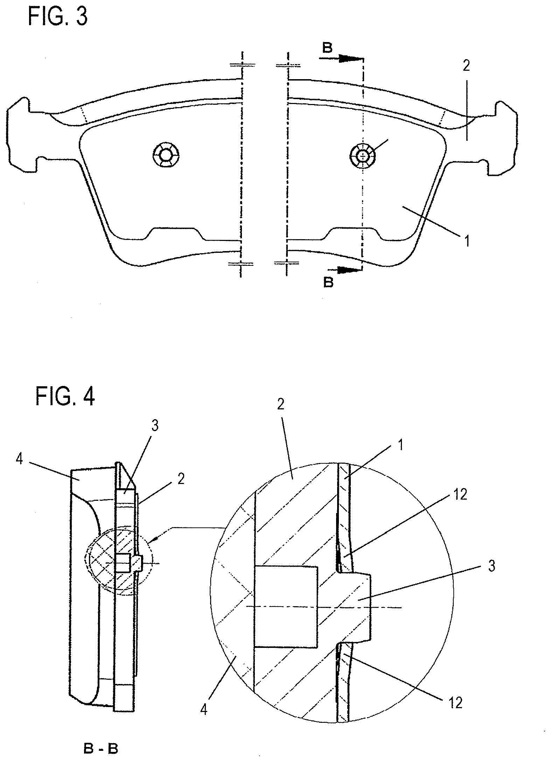

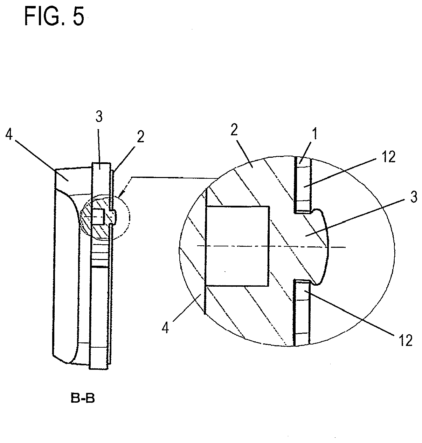

The mounting hole 11 of this embodiment on the right side of Fig. 1 comprises two protrusions 12 which protrude radially inwardly into the respective mounting hole 11, i.e. towards the center of the circular mounting hole 11. The mounting hole 11 on the left side of Fig. 1 comprises three protrusions 12 which protrude radially inwardly into the respective mounting hole 11. Each protrusion 12 of each mounting hole 11 of the antinoise shim 1 comprises a contact portion 13 on the inwardly oriented side of the protrusion 12, which is formed to be conform with the outer peripheral surface of a rivet 3 to be placed inside the mounting hole 11, as can be seen in, for example, Figs. 4 and 5.

Fig. 2 shows a sectional view of the antinoise shim of Fig. 1 along a line A-A of Fig. 1 as well as an enlarged sectional view of the mounting hole 11 having two protrusions 12 on the right side of Fig. 1. The protrusions 12 of the mounting hole 11 in this embodiment are inclined in an axial direction of the mounting hole 11 in a way such that the contact portions 13 of the protrusions 12 project away from a mounting side of the antinoise shim 1, namely a left side surface of the antinoise shim 1 in the enlarged view in Fig. 2, with which the antinoise shim 1 is to be mounted to a pad supporting plate 2, as can be seen in Fig. 4. The mounting side of the antinoise shim 1 is an adherend surface of the antinoise shim 1, with which the antinoise shim 1 is to be glued to the pad supporting plate 2.

In Fig. 3, an assembly of the antinoise shim 1 of Figs. 1 and 2 and the pad supporting plate 2 is shown in a front view. Furthermore, the pad supporting plate 2 and the antinoise shim 1 mounted thereon are mechanically fixed to a brake pad 4, which cannot be seen in this view. Similarly to Fig. 1, for reasons of comprehensibility, the brake pad assembly is shown in a shortened way by means of breaklines. The pad supporting plate 2 has a general shape being substantially similar to the shape of the antinoise-shim 1. At the respective side ends of the pad supporting plate 2, respective mounting portions are provided.

Fig. 4 shows a sectional view of the brake pad assembly along a line B-B of Fig. 3, in which the pad supporting plate 2 and the antinoise shim 1 mounted thereon are mounted on the brake pad 4. Furthermore, Fig. 4 shows an enlarged sectional view of a rivet-mounting hole-fitting including the mounting hole 11 having two protrusions 12, which is shown on the right side of Fig. 3. The rivet 3 which is formed integrally with the pad supporting plate 2 is placed inside the mounting hole 11, wherein the rivet 3 has chamfered edges at its top end in order to simplify a mounting process of the antinoise shim 1 on the pad supporting plate 2. Thereby, the contact portions 13 of the protrusions 12, which are formed in conformity with the outer circumference of the rivet 3, are in tight contact with the outer circumference of the rivet 3. Also, by appropriately dimensioning the protrusions 12, it is possible to press the rivet 3 into the mounting hole 11 so that the antinoise shim 1 is fixed to the pad supporting plate 2 by press-fitting. Additionally, the antinoise shim 1 is glued to the pad supporting plate 2. By this connection alone, the antinoise shim 1 would be fixedly secured to the pad supporting plate 2 of the brake pad assembly.

Fig. 5 shows a further sectional view of the brake pad assembly along a line B-B of Fig. 3, in which the pad supporting plate 2 and the antinoise shim 1 mounted thereon are mechanically mounted on the brake pad 4. Here, the rivet 3 is radial riveted such that the circumference of the top end of the rivet 3 has been compressed and extended to the side. Thereby, the protrusions 12 of the antinoise shim 1 are pressed downwards towards the pad supporting plate 2 and are thereby wedged between the pad supporting plate 2 and the compressed end of the rivet 3. With this structure, the antinoise shim 1 is captively fixed to the pad supporting plate 2 and thereby to the brake pad assembly.

## Claims

1. Antinoise shim (1) for a disc brake, comprising
at least two mounting holes (11) for mounting the antinoise shim (1) on a pad supporting plate (2),
wherein multiple protrusions (12) are provided in each mounting hole (11) and protrude radially inwardly into the mounting hole (11), and
wherein the radial protrusions (12) have a contact portion (13) at its radially inner end, which is contactable with a rivet (3) used to mount the antinoise shim (1) on the pad supporting plate (2),
**characterized in that**
each mounting hole (11) comprises a different number of radial protrusions (12) and / or wherein a number of radial protrusions (12) of at least one of the at least two mounting holes (11) is uneven.

2. Antinoise shim (1) according to claim 1, wherein the contact portion (13) is formed to be conform with the outer peripheral surface of the rivet (3).

3. Antinoise shim (1) according to claim 1 or 2, wherein each radial protrusion (12) in the respective mounting hole (11) is inclined in an axial direction of the respective mounting hole (11).

4. Antinoise shim (1) according to one of claims 1 to 3, wherein a distance between adjacent radial protrusions (12) is constant.

5. Antinoise shim (1) according to one of claims 1 to 4, wherein the radial protrusions (12) of one mounting hole (11) have the same lengths.

6. Antinoise shim (1) according to one of claims 1 to 5, wherein the length of at least one contact portion (13) of the radial protrusions (12) of one mounting hole (11) is different from the length of another contact portion (13).

7. Brake shoe of a disc brake comprising
a pad supporting plate (2),
a brake pad (4) mounted on one side of the pad supporting plate (2), the antinoise shim (1) according to one of claims 1 to 6 mounted on the pad supporting plate (2) on the opposite side of the brake pad (4),
wherein the antinoise shim (1) is mounted on the pad supporting plate (2) by means of rivets (3) which are inserted through the mounting holes (11) of the antinoise shim (1).

8. Brake shoe according to claim 7, wherein
the antinoise shim (1) is additionally glued onto the pad supporting plate (2).

9. Brake shoe according to claims 7 or 8, wherein
the radial protrusions (12) protrude from the antinoise shim (1) in an opposite direction to the pad supporting plate (2).

10. Brake shoe according to one of claims 7 to 9, wherein
the rivets (3) are integrally formed with the pad supporting plate (2).

## Patentansprüche

1. Geräuschdämpfende Unterlagsscheibe (1) für eine Scheibenbremse, umfassend mindestens zwei Befestigungslöcher (11) zur Befestigung der geräuschdämpfenden Unterlagsscheibe (1) an einer Polsterstützplatte (2), wobei mehrere Vorsprünge (12) in jedem Montageloch (11) vorgesehen sind und radial nach innen in das Montageloch (11) hineinragen, und
wobei die radialen Vorsprünge (12) an ihrem radial inneren Ende einen Kontaktabschnitt (13) aufweisen, der mit einem Niet (3) in Kontakt gebracht werden kann, der zur Befestigung der geräuschdämpfenden Unterlagsscheibe (1) auf der Polsterstützplatte (2) verwendet wird,
**dadurch gekennzeichnet, dass**
jedes Befestigungsloch (11) eine unterschiedliche Anzahl von radialen Vorsprüngen (12) umfasst und/oder wobei eine Anzahl der radialen Vorsprünge (12) mindestens eines der mindestens zwei Befestigungslöcher (11) ungerade ist.

2. Geräuschdämpfende Unterlagsscheibe (1) gemäß Anspruch 1, wobei der Kontaktabschnitt (13) so ausgebildet ist, dass er mit der äußeren Umfangsfläche des Niets (3) übereinstimmt.

3. Geräuschdämpfende Unterlagsscheibe (1) gemäß Anspruch 1 oder 2, wobei jeder radiale Vorsprung (12) in dem jeweiligen Montageloch (11) in einer axialen Richtung des jeweiligen Montagelochs (11) geneigt ist.

4. Geräuschdämpfende Unterlagsscheibe (1) gemäß einem der Ansprüche 1 bis 3, wobei ein Abstand zwischen benachbarten radialen Vorsprüngen (12) konstant ist.

5. Geräuschdämpfende Unterlagsscheibe (1) gemäß einem der Ansprüche 1 bis 4, wobei die radialen Vorsprünge (12) eines Montagelochs (11) die gleichen Längen aufweisen.

6. Geräuschdämpfende Unterlagsscheibe (1) gemäß nach einem der Ansprüche 1 bis 5, wobei sich die Länge mindestens eines Kontaktabschnitts (13) der radialen Vorsprünge (12) eines Montagelochs (11) von der Länge eines anderen Kontaktabschnitts (13) unterscheidet.

7. Bremsschuh einer Scheibenbremse umfassend
eine Polsterstützplatte (2),
einen auf einer Seite der Polsterstützplatte (2) befestigten Bremsbelag (4), die auf der Polsterstützplatte (2) auf der gegenüberliegenden Seite des Bremsbelags (4) befestigte geräuschdämpfende Unterlagsscheibe (1) gemäß einem der Ansprüche 1 bis 6,
wobei die geräuschdämpfende Unterlagsscheibe (1) auf der Polsterstützplatte (2) mittels Nieten (3) befestigt ist, die durch die Befestigungslöcher (11) der geräuschdämpfenden Unterlagsscheibe (1) eingeführt sind.

8. Bremsschuh gemäß Anspruch 7, wobei
die geräuschdämpfende Unterlagsscheibe (1) zusätzlich auf die Polsterstützplatte (2) aufgeklebt ist.

9. Bremsschuh gemäß Anspruch 7 oder 8, wobei
die radialen Vorsprünge (12) von der geräuschdämpfenden Unterlagsscheibe (1) in entgegengesetzter Richtung zur Polsterstützplatte (2) vorstehen.

10. Bremsschuh gemäß einem der Ansprüche 7 bis 9, wobei
die Nieten (3) einstückig mit der Polsterstützplatte (2) ausgebildet sind.

## Revendications

1. Cale antibruit (1) pour frein à disque, comprenant
au moins deux trous de montage (11) pour monter la cale antibruit (1) sur une plaque supportant une plaquette (2),
dans laquelle de multiples protubérances (12) sont pourvues dans chaque trou de montage (11) et ressortent radialement vers l'intérieur dans le trou de montage (11), et
dans laquelle les protubérances radiales (12) ont une portion de contact (13) à leur extrémité radialement interne, qui peut entrer en contact avec un rivet (3) utilisé pour monter la cale antibruit (1) sur la plaque supportant une plaquette (2),
**caractérisée en ce que**
chaque trou de montage (11) comprend un nombre différent de protubérances radiales (12) et/ou **en ce que** le nombre de protubérances radiales (12) d'au moins un trou parmi lesdits au moins deux trous de montage (11) est impair.

2. Cale antibruit (1) selon la revendication 1, dans laquelle la portion de contact (13) est conformée pour s'adapter à la surface périphérique externe du rivet (3).

3. Cale antibruit (1) selon la revendication 1 ou 2, dans laquelle chaque protubérance radiale (12) dans le trou de montage respectif (11) est inclinée en direction axiale du trou de montage respectif (11).

4. Cale antibruit (1) selon une des revendications 1 à 3, dans laquelle la distance entre des protubérances radiales adjacentes (12) est constante.

5. Cale antibruit (1) selon une des revendications 1 à 4, dans laquelle les protubérances radiales (12) d'un trou de montage (11) ont des longueurs égales.

6. Cale antibruit (1) selon une des revendications 1 à 5, dans laquelle la longueur d'au moins une portion de contact (13) des protubérances radiales (12) d'un trou de montage (11) est différente de la longueur d'une autre portion de contact (13).

7. Étrier de frein d'un frein à disque comprenant
une plaque supportant une plaquette (2),
une plaquette de frein (4) montée sur un côté de la plaque supportant une plaquette (2),
la cale antibruit (1) selon une des revendications 1 à 6 montée sur la plaque supportant une plaquette (2) sur le côté opposé de la plaquette de frein (4),
dans lequel la cale antibruit (1) est montée sur la plaque supportant une plaquette (2) au moyen de rivets (3) qui sont insérés à travers les trous de montage (11) de la cale antibruit (1).

8. Étrier de frein selon la revendication 7, dans lequel
la cale antibruit (1) est en outre colée sur la plaque supportant une plaquette (2).

9. Étrier de frein selon la revendication 7 ou 8, dans lequel
les protubérances radiales (12) ressortent de la cale antibruit (1) en direction opposée à la plaque supportant une plaquette (2).

10. Étrier de frein selon une des revendications 7 à 9, dans lequel les rivets (3) sont intégrés avec la plaque supportant une plaquette (2).
